# EUROPÄISCHE PATENTANMELDUNG

(11) **EP 3 587 046 A1**
(43) Veröffentlichungstag der Anmeldung: **01.01.2020**
(21) Anmeldenummer: 18180479.0
(22) Anmeldetag: 28.06.2018
(51) Int. Cl.: B25J 9/16, G05B 13/02

(54) **VERFAHREN UND VORRICHTUNG ZUM RECHNERGESTÜTZTEN ERMITTELN VON REGELPARAMETERN FÜR EINE GÜNSTIGE HANDLUNG EINES TECHNISCHEN SYSTEMS**

(71) Anmelder: Siemens Aktiengesellschaft, 80333 München (DE)
(72) Erfinder: Bischoff, Martin, 85653 Aying, Großhelfendorf (DE); Tokic, Michel, 88069 Tettnang (DE)

(57) **Zusammenfassung**

Die Erfindung betrifft ein Verfahren und eine Vorrichtung zum rechnergestützten Ermitteln von Regelparametern für eine günstige Handlung eines technischen Systems. Mittels mindestens eines Sensors (101) wird ein Ausgangszustand (AZ) und eine Umgebung (UM) des technischen Systems (TS) erfasst und damit ein physikalisches Simulationsmodell (SIM) des technischen Systems erstellt. Mittels des Simulationsmodells (SIM) und ausgehend vom Ausgangszustand (AZ) und in Bezug auf einen vorgegebenen Zielzustand (ZZ), werden verschiedene Kombinationen aus Handlungsschritten des technischen Systems (TS) simuliert, wobei Regelparameter des technischen Systems zum Ausführen der Handlungsschritte variiert werden. Anhand der Simulationsdaten und mittels einer Bewertung eines jeweiligen Handlungsschrittes wird eine maschinelle Lernroutine trainiert und mit der trainierten maschinellen Lernroutine eine optimierte Kombination aus Handlungsschritten ermittelt. Die Regelparameter der optimierten Kombination aus Handlungsschritten werden zum Steuern des technischen Systems (TS) ausgegeben.

## Beschreibung

Die Erfindung betrifft ein Verfahren und eine Vorrichtung zum rechnergestützten Ermitteln von Regelparametern für eine günstige Handlung eines technischen Systems, insbesondere eines autonomen technischen Systems wie beispielsweise eines autonomen Roboters.

Mittels autonomen technischen Systemen, wie z.B. autonomen Robotern, können Objekte manipuliert werden. Als Beispiel ist hier das Greifen eines Objektes durch einen Endeffektor eines Roboters zu nennen. Herkömmliche Steuerungsverfahren basieren beispielsweise auf dem Erkennen des Objektes und der Umgebung und des technischen Systems darin durch Sensoren und dem Ermitteln eines geeigneten Handlungsablaufs oder Pfades zum Greifen des Gegenstandes mittels Pfadplanungsalgorithmen. So können herkömmliche Verfahren typischerweise lediglich einen Ist-Zustand einer Umgebung eines technischen Systems betrachten und nur schwer prognostizieren, wie, aufgrund von physikalischen Gesetzmäßigkeiten, dessen Handlungen die Umgebung beeinflussen.

Es können beispielsweise sogenannte simultane Lokalisierung und Kartenerstellungsverfahren (englisch: "Simultaneous Localization and Mapping"), auch als SLAM-Verfahren bekannt, genutzt werden, wobei mittels Sensor-Daten die Umgebung eines autonomen technischen Systems erfasst oder geschätzt wird. Insbesondere wird die Position und Ausrichtung des autonomen technischen Systems selbst und ggf. weiterer Objekte in der Umgebung erfasst. Mittels Pfadplanungsalgorithmen, welche typischerweise auf mathematischen und/oder numerischen Methoden basieren, kann ein zulässiger und günstiger Pfad bzw. Abfolge von Handlungsschritten für das autonome technische System ermittelt werden. Solche Verfahren berücksichtigen aber in der Regel keine Konsequenzen einer Handlung des autonomen technischen Systems oder weitere physikalischen Effekte.

Es ist daher eine Aufgabe der vorliegenden Erfindung, eine Möglichkeit zu schaffen, günstige Handlungsschritte für ein technisches System unter Berücksichtigung dessen Umgebung zu ermitteln.

Die Aufgabe wird gelöst durch ein Verfahren mit den Merkmalen des Patentanspruchs 1, einer Vorrichtung und ein Computerprogrammprodukt. Vorteilhafte Ausführungsformen und Weiterbildungen der Erfindung sind in den abhängigen Ansprüchen angegeben.

Ein erster Aspekt der Erfindung betrifft ein Verfahren zum rechnergestützten Ermitteln von Regelparametern für eine günstige Handlung eines technischen Systems, umfassend die Verfahrensschritte:
- Erfassen eines Ausgangszustands und einer Umgebung des technischen Systems mittels mindestens eines Sensors,
- Generieren eines physikalischen Simulationsmodells des technischen Systems und dessen Umgebung,
- Ermitteln eines Zielzustandes für das technische System,
- Simulieren verschiedener Kombinationen aus Handlungsschritten des technischen Systems mittels des physikalischen Simulationsmodells, ausgehend vom Ausgangszustand und in Bezug auf den Zielzustand, wobei Regelparameter des technischen Systems zum Ausführen der Handlungsschritte variiert werden, und Ausgeben von jeweiligen resultierenden Simulationsdaten,
- Trainieren einer maschinellen Lernroutine anhand der jeweiligen resultierenden Simulationsdaten und mittels einer Bewertung eines jeweiligen Handlungsschrittes,
- Ermitteln einer optimierten Kombination aus Handlungsschritten anhand der trainierten maschinellen Lernroutine, wobei der optimierten Kombination aus Handlungsschritten eine günstige Bewertung zugeordnet ist,
   und
- Ausgeben der Regelparameter der optimierten Kombination aus Handlungsschritten zum Steuern des technischen Systems.

Es ist ein Vorteil der Erfindung, dass mittels einer rechnergestützten Simulation in Kombination mit einer maschinellen Lernroutine auf schnelle und effiziente Weise eine Handlung bzw. ein Handlungsablauf bzw. Pfad für ein technisches System bestimmt werden kann, da insbesondere physikalische Effekte, wie z.B. Gravitation oder Kollision, und physikalische Größen bei der Ermittlung einer optimierten Kombination aus Handlungsschritten berücksichtigt werden können. Die maschinelle Lernroutine kann günstige Handlungsschritte ermitteln, die physikalische Effekte, wie z.B. Wechselwirkungen mit der Umgebung, nutzen, da die maschinelle Lernroutine mittels Simulationsdaten trainiert wird. Insbesondere kann ein physikalisches Simulationsmodell erstellt und anstatt eines herkömmlichen SLAM-Verfahrens genutzt werden. Eine Pfadplanung kann insbesondere durch ein wiederholtes Durchführen der physikalischen Simulation mit unterschiedlichen Pfaden, d.h. beispielsweise unterschiedliche Ansteuerungsmöglichkeiten des technischen Systems mittels verschiedenere Regelparameter, im Rahmen eines maschinellen Lernverfahrens erfolgen. Die Regelparameter, oder Steuerparameter, umfassen insbesondere Steuerungsbefehle oder Anweisungen zum Steuern des technischen Systems. Durch eine beispielsweise positive Bewertung der Pfade kann eine optimierte Pfadplanung erzielt werden, da beispielsweise physikalische Gesetze in die Planung mit einbezogen werden können. Dadurch ist die Bestimmung eines günstigen Handlungsablaufs insbesondere flexibel, da beispielsweise die Abfolge der Handlungsschritte nicht starr vorgegeben ist.

Ein technisches System kann insbesondere ein autonomes technisches System, wie z.B. ein autonomer Roboter, sein. Unter Ermittlung einer Kombination von Handlungsschritten kann insbesondere eine Planung einer Aktionssequenz, eine Handlungsplanung oder eine Pfadplanung verstanden werden, wobei die einzelnen Handlungsschritte mittels Regelparameter gesteuert werden. Unter einem Handlungsschritt kann insbesondere eine Aktion oder eine Bewegung des technischen Systems verstanden werden.

Unter einer maschinellen Lernroutine kann ein maschinelles Lernverfahren, wie z.B. ein neuronales Netz, verstanden werden. Insbesondere kann ein Verfahren zum überwachten Lernen, wie z.B. zum bestärkenden Lernen (englisch: "Reinforcement Learning"), genutzt werden. Die maschinelle Lernroutine wird ausgehend von einem durch mindestens einen Sensor ermittelten Ausgangszustand des technischen Systems und in Bezug auf einen Zielzustand trainiert. In anderen Worten, ein Zielzustand wird zum Trainieren der maschinelle Lernroutine vorgegeben und die maschinelle Lernroutine wird derart trainiert, dass sie ausgehend von einem Ausgangszustand eine Kombination von Handlungsschritten ermittelt, die zum Zielzustand führen.

Der Zielzustand kann beispielsweise vorgegeben sein und/oder als Datensatz eingelesen werden. Es können verschiedene Kombinationen von Handlungsschritten ausgehend vom Ausgangszustand zum Zielzustand führen, wobei manche der verschiedenen Kombinationen günstiger sein können. Die verschiedenen Handlungsschritte können mittels des Simulationsmodells rechnergestützt simuliert werden und jeweils Simulationsdaten ausgegeben werden. Die Simulationsdaten können insbesondere Werte der Regelparameter, Zustände, Aktionen und Reaktionen des technischen Systems und physikalische Effekte und Größen des technischen Systems und dessen Umgebung umfassen.

Jeder Handlungsschritt und/oder dessen Auswirkung kann bewertet werden oder jedem Handlungsschritt kann jeweils eine Bewertung zugeordnet sein. Die maschinelle Lernroutine kann insbesondere anhand der Bewertungen, die jeweils einem Handlungsschritt zugeordnet sind, trainiert werden, wie z.B. mittels einer Belohnungsfunktion (englisch: "reward function"). Insbesondere können günstige Handlungsschritte bevorzugt werden, wobei unter dem Begriff "günstig" in Zusammenhang mit der Erfindung beispielsweise vorteilhaft, brauchbar, geeignet, sinnvoll, effizient, energieeffizient, schnell, auf kurzem Weg oder ähnliches verstanden werden kann. Die Ermittlung einer Kombination aus günstigen Handlungsschritten kann beispielsweise durch einen Vergleich der Gesamtbewertung der verschiedenen Kombinationen aus Handlungsschritten erfolgen, wobei diejenige Kombination mit einer günstigen Gesamtbewertung selektiert werden kann.

In einer vorteilhaften Ausführungsform des Verfahrens kann die maschinelle Lernroutine trainiert werden, sobald Simulationsdaten von mindestens einer Kombination aus Handlungsschritten verfügbar sind.

Es kann insbesondere vorteilhaft sein, die computergestützte Simulation des technischen Systems sowie das Training der maschinellen Lernroutine parallel durchzuführen. Insbesondere können mehrere Simulationen parallel berechnet werden. Beispielsweise kann eine parallele Berechnung auf mehr als einer Recheneinheit, wie z.B. Grafikprozessoren, durchgeführt werden. Damit kann beispielsweise eine schnelle und effiziente Ermittlung einer günstigen Kombination aus Handlungsschritten erzielt werden.

In einer weiteren vorteilhaften Ausführungsform des Verfahrens kann die Simulation des technischen Systems und das Training der maschinellen Lernroutine für mehr als einen Zielzustand und/oder für mehr als einen Ausgangszustand durchgeführt werden und jeweils eine Kombination aus Handlungsschritten mit einer günstigen Bewertung ermittelt und in einer Speichereinheit gespeichert werden.

Beispielsweise kann mehr als eine maschinelle Lernroutine mittels Simulationsdaten zu verschiedenen Ausgangszuständen und in Bezug auf verschiedene Zielzustände trainiert werden und jeweils eine Kombination aus Handlungsschritten, der eine günstige Bewertung zugeordnet ist, gespeichert werden. Somit kann vorzugsweise für verschiedene Zustände des technischen Systems eine entsprechende trainierte maschinelle Lernroutine abgespeichert werden, so dass auf diese schnell zugegriffen werden kann, wenn z.B. ein entsprechender Ausgangszustand des technischen Systems detektiert wird. Es ist auch möglich, ähnliche Aktionen zu simulieren, eine entsprechende maschinelle Lernroutine zu trainieren und diese für künftige Trainings zu nutzen, so dass die Berechnungszeit verkürzt werden kann. Eine Speichereinheit kann insbesondere eine Datenbank sein.

In einer weiteren vorteilhaften Ausführungsform des Verfahrens können Regelparameter für eine optimierte Kombination aus Handlungsschritten mit einer günstigen Bewertung in Abhängigkeit eines Zielzustandes in einer Speichereinheit gespeichert werden.

Vorzugsweise kann anhand einer trainierten maschinellen Lernroutine eine Kombination aus Handlungsschritten, der eine günstige Bewertung zugeordnet ist, ermittelt werden und die entsprechenden Regelparameter für das technische System, die diese Handlungsschritte regeln, können in einer Datenbank abgelegt werden. So können diese beispielsweise für eine künftige Aktion mit einem gleichen Ausgangs- und Zielzustand genutzt werden.

In einer weiteren vorteilhaften Ausführungsform des Verfahrens können die Regelparameter für eine optimierte Kombination aus Handlungsschritten an das technische System übertragen werden.

Die Regelparameter können zum Steuern des technischen Systems an das technische System übertragen werden, so dass das technische System die Kombination aus Handlungsschritten ausführen kann. Vorzugsweise können lediglich Regelparameter zum Steuern einer Kombination aus Handlungsschritten, der eine günstige Bewertung zugeordnet ist, an das technische System übertragen werden.

In einer weiteren vorteilhaften Ausführungsform des Verfahrens kann der Zielzustand abhängig vom erfassten Anfangszustand und/oder der erfassten Umgebung des technischen Systems ermittelt werden.

Vorzugsweise kann mittels mindestens eines Sensors ein Anfangszustand ermittelt werden und abhängig davon ein Zielzustand bestimmt werden. Beispielsweise kann ein Zielzustand einem Anfangszustand zugeordnet sein oder ein Zielzustand kann aus einer Menge an vorgegebenen Zielzuständen selektiert werden. Als Beispiel kann die Detektion eines Objekts mittels einer Kamera genannt werden, wobei abhängig von der Detektion der Zielzustand, z.B. "Greifen des Objekts", vorgegeben wird.

In einer weiteren vorteilhaften Ausführungsform des Verfahrens kann die Bewertung eines Handlungsschrittes abhängig von einem Ergebnis eines Handlungsschrittes und/oder in Bezug auf den Zielzustand ausgeführt werden.

Ein Handlungsschritt des technischen Systems, wie z.B. eine Aktion eines Endeffektors, kann abhängig vom Ergebnis, oder auch einer Auswirkung, der Aktion bewertet werden. Insbesondere kann die Bewertung dem Handlungsschritt zugeordnet werden. Eine Bewertung kann insbesondere abhängig von einem ermittelten Zielzustand erfolgen.

In einer weiteren vorteilhaften Ausführungsform des Verfahrens kann das physikalische Simulationsmodell abhängig vom Zielzustand und/oder von der Umgebung und/oder von einer Art des technischen Systems konstruiert werden.

Vorzugsweise kann die Komplexität und/oder die Dimension des Simulationsmodells und der rechnergestützten Simulation abhängig vom Zielzustand und/oder von der Umgebung und/oder von der Art des technischen Systems gewählt werden.

In einer weiteren vorteilhaften Ausführungsform des Verfahrens können die Umgebung und der Ausgangszustand des technischen Systems fortlaufend mittels eines Sensors erfasst werden und das physikalische Simulationsmodell kann mittels der Sensordaten fortlaufend aktualisiert werden.

Vorzugsweise werden ein aktueller Ausgangszustand und die Umgebung des technischen Systems kontinuierlich oder zu vorgegebenen Zeitpunkten mittels eines Sensors überwacht, so dass das physikalische Simulationsmodell entsprechend angepasst werden kann.

In einer weiteren vorteilhaften Ausführungsform des Verfahrens können die physikalischen Eigenschaften eines Objektes in der Umgebung des technischen Systems als Parameterdaten erfasst, in einer Speichereinheit gespeichert und im physikalischen Simulationsmodell integriert werden.

Zusätzlich zur Objekterkennung können physikalische Eigenschaften oder Parameter eines Objektes in z.B. einer Datenbank abgefragt werden. Beispielsweise können physikalische Größen, wie z.B. Gewicht oder Materialeigenschaften, eines Objekts in der Umgebung des technischen Systems vorab erfasst und in einer Speichereinheit gespeichert werden. Die physikalischen Eigenschaften können insbesondere als Parameterdaten, oder auch als Eingabedaten, für das Simulationsmodell genutzt werden. Somit können beispielsweise physikalische Effekte, wie z.B. das Fallen eines Objektes im Gravitationsfeld der Erde, detailliert simuliert werden.

In einer weiteren vorteilhaften Ausführungsform des Verfahrens können verschiedene Kombinationen aus Handlungsschritten des technischen Systems zeitlich parallel auf mehr als einer Recheneinheit simuliert werden.

Vorzugsweise kann die rechnergestützte Simulation und/oder das Trainieren einer maschinellen Lernroutine parallel, wie z.B. auf Grafikprozessoren (englisch: "graphics processing units", kurz GPUs), durchgeführt werden. Damit kann insbesondere eine schnelle und effiziente Berechnung einer Kombination aus günstigen Handlungsschritten erfolgen.

Ein weiterer Aspekt der Erfindung betrifft eine Vorrichtung zum rechnergestützten Ermitteln von Regelparametern für eine günstige Handlung eines technischen Systems, umfassend:
- mindestens einen Sensor zum Erfassen eines Ausgangszustands und einer Umgebung des technischen Systems,
- ein Generierungsmodul zum Generieren eines physikalischen Simulationsmodells des technischen Systems und dessen Umgebung,
- ein Zielmodul zum Ermitteln eines Zielzustandes für das technische System,
- ein Simulationsmodul zum Simulieren verschiedener Kombinationen aus Handlungsschritten des technischen Systems mittels des physikalischen Simulationsmodells, ausgehend vom Ausgangszustand und in Bezug auf den Zielzustand, wobei Regelparameter des technischen Systems zum Ausführen der Handlungsschritte variiert werden, und Ausgeben von jeweiligen resultierenden Simulationsdaten,
- ein Trainingsmodul zum Trainieren einer maschinellen Lernroutine anhand der jeweiligen resultierenden Simulationsdaten mittels einer Bewertung eines Ergebnisses eines jeweiligen Handlungsschrittes,
- ein Optimierungsmodul zum Ermitteln einer optimierten Kombination aus Handlungsschritten anhand der trainierten maschinellen Lernroutine, wobei der optimierten Kombination aus Handlungsschritten eine günstige Bewertung zugeordnet ist, und
- ein Ausgabemodul zum Ausgeben der Regelparameter der optimierten Kombination aus Handlungsschritten zum Steuern des technischen Systems.

Die Vorrichtung kann insbesondere in einem technischen System integriert oder mit diesem gekoppelt sein.

In einer vorteilhaften Ausführungsform umfasst die Vorrichtung ein Übertragungsmodul zum Übertragen der Regelparameter an das technische System.

In einer weiteren vorteilhaften Ausführungsform umfasst die Vorrichtung eine Speichereinheit und/oder mindestens eine Recheneinheit.

Eine Speichereinheit kann beispielsweise eine Datenbank sein. Eine Recheneinheit kann insbesondere ein Prozessor oder ein Grafikprozessor sein.

Des Weiteren umfasst die Erfindung ein Computerprogrammprodukt, das direkt in einen programmierbaren Computer ladbar ist, umfassend Programmcodeteile, die dazu geeignet sind, die Schritte des erfindungsgemäßen Verfahrens durchzuführen.

Ausführungsbeispiele des erfindungsgemäßen Verfahrens und der Vorrichtung sind in den Zeichnungen beispielhaft dargestellt und werden anhand der nachfolgenden Beschreibung näher erläutert. Es zeigen in schematischer Darstellung:
- Fig. 1: ein Ablaufdiagramm eines erfindungsgemäßen Verfahrens zum rechnergestützten Ermitteln von Regelparametern für eine günstige Handlung eines technischen Systems;
- Fig. 2: eine schematische Darstellung eines erfindungsgemäßen Verfahrens zum rechnergestützten Ermitteln von Regelparametern für eine günstige Handlung eines technischen Systems; und
- Fig. 3: eine schematische Darstellung einer erfindungsgemäßen Vorrichtung zum rechnergestützten Ermitteln von Regelparametern für eine günstige Handlung eines technischen Systems.

Einander entsprechende Gegenstände sind in allen Figuren mit den gleichen Bezugszeichen versehen.

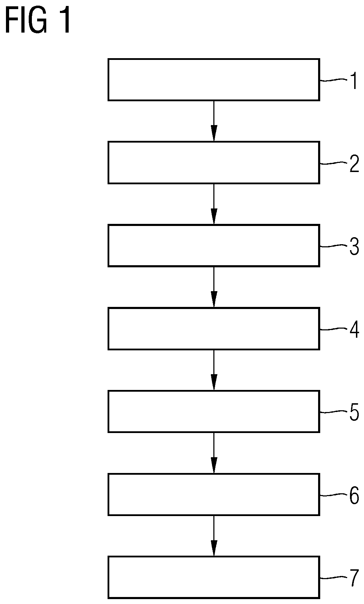

Figur 1 zeigt schematisch ein Ablaufdiagramm eines erfindungsgemäßen Verfahrens zum rechnergestützten Ermitteln von Regelparametern für eine günstige Handlung eines technischen Systems umfassend die folgenden Verfahrensschritte.

Ein technisches System kann im Folgenden insbesondere ein autonomes technisches System, wie z.B. ein autonomer Roboter in einer Industrieumgebung sein. Das technische System kann einzelne Handlungsschritte einer Handlung ausführen, um, ausgehend von einer Ausgangssituation, einen ermittelten Zielzustand zu erreichen. Die Handlungsschritte werden mittels Regelparametern vorgegeben, d.h. das technische System wird mittels der Regelparameter gesteuert.

Im Schritt 1 des erfindungsgemäßen Verfahrens werden mittels mindestens eines Sensors Daten eines Ausgangszustands des technischen Systems und dessen Umgebung erfasst. Der mindestens eine Sensor kann Teil des technischen Systems, mit diesem gekoppelt oder diesem zugeordnet sein. Beispielsweise kann das technische System ein Industrieroboter in einer Produktionsanlage sein, dessen aktuelle Position, Ausrichtung und Umgebung mittels einer Kamera erfasst wird. Die Umgebung kann beispielsweise die direkte Umgebung in einem vorgegebenen Aktionsradius des technischen Systems sein. Eigenschaften und/oder Zustandsgrößen der Umgebung können insbesondere dort befindliche Gegenstände oder physikalische Größen wie Raumhöhe oder Temperatur sein.

Im Schritt 2 wird ein physikalisches Simulationsmodell des technischen Systems und dessen Umgebung anhand der vom mindestens einen Sensor erfassten Daten generiert. Insbesondere kann bereits vorab ein physikalisches Simulationsmodell des technischen Systems erstellt werden, welches lediglich mittels der erfassten Daten als Eingabedaten angepasst wird. Das Simulationsmodell ist insbesondere ein physikalisches Simulationsmodell, wobei Naturgesetze, wie z.B. Gravitation, implementiert sind.

Die Komplexität und/oder die Domäne und/oder Dimension des physikalischen Simulationsmodells kann abhängig vom Zielzustand und/oder von der Umgebung und/oder von der Art des technischen Systems gewählt werden. Beispielsweise ist es denkbar, dass eine Simulation der Starrkörpermechanik eingesetzt wird, um das Greifen eines festen Gegenstandes durch einen Roboter zu simulieren. Je nach Einsatzgebiet des technischen Systems kann die Simulation aus anderen physikalischen Domänen aufgesetzt sein. Beispielsweise kann ein autonomes technisches System einen chemischen, hydrodynamischen oder finanzwirtschaftlichen Prozess durchführen, so dass eine entsprechende domänenspezifische Simulation konstruiert werden kann, um die Auswirkungen der Aktionen des technischen Systems zu prognostizieren.

Im Schritt 3 werden Daten eines Zielzustandes ermittelt und eingelesen. Der Zielzustand kann beispielsweise als ein Parameterdatensatz oder ein Vektor vorliegen und beschreibt insbesondere den Ergebniszustand einer Handlung. Insbesondere kann der Zielzustand vorgegeben sein und/oder anhand der erfassten Ausgangssituation ermittelt werden. Ein Zielzustand kann beispielsweise angeben, dass ein Objekt vom technischen System mit einem Endeffektor gegriffen sein soll, wobei ein Ausgangszustand beispielsweise das Objekt in der Umgebung des technischen Systems beschreibt.

Im Schritt 4 wird, beispielsweise auf einem oder mehreren Prozessoren, eine computergestützte physikalische Simulation des technischen Systems durchgeführt. Dazu werden die Daten des Ausgangszustands, Daten der Umgebung und Daten des Zielzustands eingelesen und davon ausgehend eine Simulation aufgesetzt. Insbesondere wird mindestens eine Kombination aus Handlungsschritten des technischen Systems simuliert, wobei die Simulation ausgehend vom Ausgangszustand startet und die Handlungsschritte derart gewählt werden, dass der vorgegebene Zielzustand vom technischen System erreicht wird.

Es können des Weiteren physikalische Eigenschaften von Objekten in der Umgebung, die z.B. als Parameterdaten in einer Datenbank gespeichert sind, eingelesen werden und im Simulationsmodell berücksichtigt werden. Beispielsweise kann mittels eines Sensors die Größe eines zu greifenden Objektes erfasst werden. Dazu kann mittels einer Sammlung von physikalischen Eigenschaften des Objektes beispielsweise die Beschaffenheit der Oberfläche oder das Gewicht ermittelt und in der Simulation genutzt werden.

Es ist auch möglich, dass verschiedene Kombinationen aus Handlungsschritten, ausgehend von einem Ausgangszustand, den Zielzustand erreichen können. Beispielsweise kann ein autonomer Roboter einen beweglichen Roboterarm um verschiedene Achsen drehen und damit auf verschiedenen Pfaden eine Zielposition erreichen. Vorzugsweise werden die verschiedenen Kombinationen aus Handlungsschritten mittels der physikalischen Simulation simuliert, wobei Regelparameter zum Steuern der verschiedenen Handlungsschritte entsprechend variiert werden. Anschließend werden die Simulationsdaten der jeweiligen Kombination aus Handlungsschritten ausgegeben. Die Simulationsdaten können als Trainingsdaten zum Trainieren eines maschinellen Lernverfahrens genutzt werden.

Die Simulationsdaten können insbesondere auch Informationen über die Wechselwirkung mit der Umgebung beinhalten. Beispielsweise kann es beim Fangen eines Objektes von einem Roboter sinnvoll sein, das Objekt zunächst abprallen zu lassen, bevor es aufgefangen und gegriffen wird. Die Wechselwirkung mit einer Wand, d.h. der Umgebung, und die daraus resultierenden Handlungsschritte können mittels der physikalischen Simulation berechnet werden.

Im Schritt 5 wird eine maschinelle Lernroutine anhand der jeweiligen Simulationsdaten trainiert. Eine Lernroutine kann beispielsweise ein Neuronales Netz sein, welches mittels Reinforcement Learning trainiert wird. Das Training kann mittels einer Bewertung eines jeweiligen Handlungsschrittes erfolgen. Beispielsweise kann ein Handlungsschritt abhängig von einem Ergebnis eines Handlungsschrittes und/oder in Bezug auf den Zielzustand bewertet werden. Eine Bewertung kann insbesondere angeben, ob ein Handlungsschritt günstig ist.

Die maschinelle Lernroutine kann insbesondere trainiert werden, sobald erste Simulationsdaten einer Kombination aus Handlungsschritten berechnet vorliegen. Die Simulation und das Training der maschinellen Lernroutine können vorzugsweise nahezu parallel berechnet werden.

Im Schritt 6 kann mittels der trainierten maschinellen Lernroutine eine optimierte Kombination aus Handlungsschritten, denen eine günstige Bewertung zugeordnet ist, ermittelt werden, wobei unter "optimiert" auch "nahe an einem Optimum" verstanden werden kann. In anderen Worten, es kann eine Abfolge aus Handlungsschritten ermittelt werden, die beispielsweise besonders günstig ist. Die Ermittlung kann beispielsweise anhand eines Vergleichs der Gesamtbewertung einer Kombination aus Handlungsschritten mit den Gesamtbewertungen anderer Kombination aus Handlungsschritten erfolgen. Insbesondere kann mittels der trainierten maschinellen Lernroutine eine günstige Handlung für das technische System ermittelt werden, wobei dazu ein Zielzustand vorgegeben wird und Sensordaten eines Ausgangszustands und einer Umgebung des technischen Systems ermittelt werden.

Im Schritt 7 können die Regelparameter, die der optimierten Kombination aus Handlungsschritten zugeordnet sind, zum Steuern des technischen Systems ausgegeben werden. Die Regelparameter können an das technische System übermittelt werden, damit dieses die günstige Kombination aus Handlungsschritten ausführen kann.

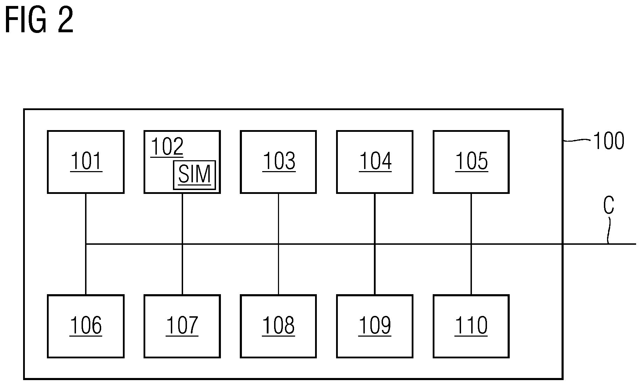

Figur 2 zeigt schematisch eine erfindungsgemäße Vorrichtung 100 in Blockdarstellung. Die Vorrichtung 100 kann beispielsweise in einem technischen System integriert oder mit diesem über eine Kommunikationsverbindung C gekoppelt sein.

Die Vorrichtung 100 umfasst mindestens einen Sensor 101 und/oder ist mit mindestens einem Sensor des technischen Systems gekoppelt. Des Weiteren umfasst die Vorrichtung 100 ein Generierungsmodul 102 zum Generieren eines physikalischen Simulationsmodells SIM des technischen Systems und dessen Umgebung, ein Zielmodul 103, ein Simulationsmodul 104, ein Trainingsmodul 105 zum Trainieren einer maschinellen Lernroutine, ein Optimierungsmodul 106 zum Ermitteln einer optimierten Kombination aus Handlungsschritten anhand der maschinellen Lernroutine, ein Ausgabemodul 107, ein Übertragungsmodul 108, mindestens eine Speichereinheit 109 und mindestens Recheneinheit 110. Vorzugsweise sind die Module und/oder Einheiten miteinander gekoppelt. Insbesondere können die einzelnen Einheiten einer erfindungsgemäßen Vorrichtung 100 einzeln in verschiedenen Systemen verbaut und miteinander gekoppelt sein, wie z.B. mehrere Sensoren, die in der Umgebung des technischen Systems TS installiert und mit der den anderen Einheiten kommunizieren.

Mittels des Generierungsmoduls 102 wird ein physikalisches Simulationsmodell SIM des technischen Systems generiert, wobei eine Komplexität, eine Domäne und eine Dimension des Simulationsmodells abhängig vom erfassten Ausgangszustand und/oder der Umgebung sein kann. Mittels des Zielmoduls 103 wird ein Zielzustand für das technische System eingelesen. Der Zielzustand soll durch eine Kombination aus Handlungsschritten ausgehend von einem Ausgangszustand und abhängig von der Umgebung des technischen Systems erreicht werden. Die Steuerung des technischen Systems erfolgt über Regelparameter, wobei mindestens ein Regelparameter einen Handlungsschritt definiert.

Im Simulationsmodul 104 werden anhand des Simulationsmodells SIM verschiedene Kombinationen aus Handlungsschritten, ausgehend vom Ausgangszustand und in Bezug auf den Zielzustand, simuliert. Es können beispielsweise auch mehrere Simulationen parallel auf mehr als einer Recheneinheit 110 durchgeführt werden. Es ist auch möglich, für verschiedene Ausgangszustände und/oder verschiedene Zielzustände jeweils mindestens eine Simulation durchzuführen und die jeweiligen Simulationsdaten auszugeben.

Im Trainingsmodul 105 wird anhand der Simulationsdaten als Trainingsdaten eine maschinelle Lernroutine trainiert, günstige Kombinationen von Handlungsschritten zu ermitteln. Dazu werden die einzelnen simulierten Handlungsschritte einer Kombination aus Handlungsschritten bewertet, wie z.B. abhängig vom jeweiligen Ergebnis eines Handlungsschrittes. Daraus ergibt sich eine mittels der Simulationsdaten trainierte maschinelle Lernroutine, die eine Kombination aus Handlungsschritten mit einer günstigen Bewertung ausgeben kann. Die trainierte maschinelle Lernroutine kann vom Trainingsmodul 105 an das Optimierungsmodul 106 ausgegeben werden. Das Ermitteln einer günstigen Kombination aus Handlungsschritten erfolgt im Optimierungsmodul 106. Im Optimierungsmodul 106 wird die trainierte maschinelle Lernmethode, z.B. auf Sensor-daten des Ausgangszustands und der Umgebung, angewandt, um eine günstige Kombination aus Handlungsschritten zu ermitteln.

Durch das Ausgabemodul 107 werden die Regelparameter zum Steuern der selektierten Kombination aus Handlungsschritten an das technische System ausgegeben und durch das Übertragungsmodul 108 an dieses zum Ausführen der Handlungsschritte übertragen.

In der Speichereinheit 109 können Simulationsdaten und/oder Regelparameter gespeichert werden. Beispielsweise können für verschiedene Ausgangszustände und/oder Zielzustände verschiedene Simulationen durchgeführt werden. Ausgehend von diesen Simulationsdaten kann mindestens eine maschinelle Lernroutine trainiert und anhand der trainierten maschinellen Lernroutine können günstige Kombinationen aus Handlungsschritten ermittelt werden.

Die mindestens eine Recheneinheit 110 kann beispielsweise ein Prozessor oder ein Grafikprozessor sein, auf dem beispielsweise ein erfindungsgemäßes Computerprogrammprodukt Schritte eines erfindungsgemäßen Verfahrens durchführen kann. Insbesondere können mehrere Recheneinheiten (nicht dargestellt) für eine parallele Simulation und/oder Training der maschinellen Lernroutine genutzt werden.

Die Vorrichtung 100 kann insbesondere dazu genutzt werden, ein autonomes technisches System zu steuern, wobei günstige Handlungsschritte zum Erreichen eines vorgegebenen Zielzustandes mittels einer maschinellen Lernroutine und einer physikalischen Simulation ermittelt werden.

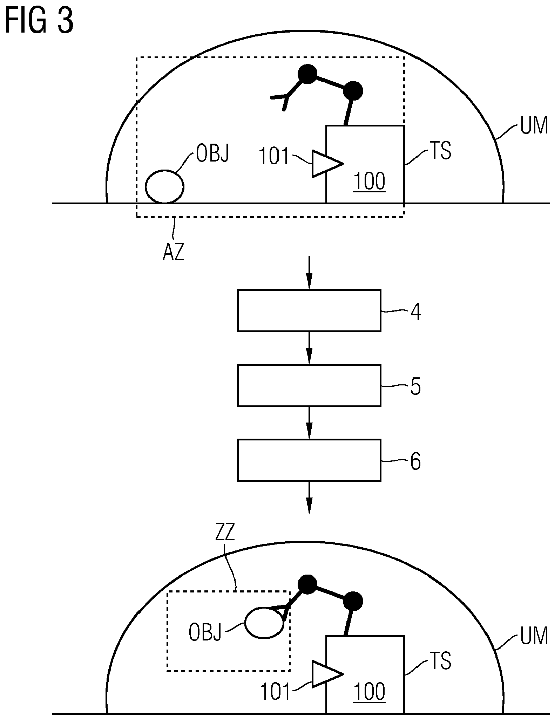

Figur 3 zeigt schematisch ein Ausführungsbeispiel eines erfindungsgemäßen Verfahrens. Als technisches System TS ist ein autonomer Roboter dargestellt, welcher mittels einer erfindungsgemäßen Vorrichtung 100 derart gesteuert wird, dass er eine optimierte Kombination aus günstigen Handlungsschritten durchzuführen kann. Der autonome Roboter umfasst einen Sensor 101, wie z.B. eine Kamera, mit der die Position und Ausrichtung des autonomen Roboters und dessen Umgebung UM erfasst werden kann. Die Kamera ist vorzugsweise mit der Vorrichtung 100 gekoppelt. Beispielsweise erfasst die Kamera 101 lediglich einen vorgegebenen Bereich der Umgebung des Roboters TS, wie z.B. dessen Aktionsbereich. Die erfassten Daten der Umgebung UM und der Ausrichtung des Roboters TS werden für die computergestützte Simulation als Eingabedaten bereitgestellt. Des Weiteren kann in der Umgebung des Roboters ein Objekt OBJ detektiert werden. Die Daten eines Ausgangszustands AZ umfassen beispielsweise das Objekt OBJ und die Position des Roboterarms.

Es wird ein Zielzustand ZZ vorgegeben, wie z.B. die Aufnahme und das Greifen des Objektes OBJ durch den Roboterarm.

In der Vorrichtung 100 wird ausgehend vom Ausgangszustand AZ und in Bezug auf den Zielzustand ZZ eine computergestützte physikalische Simulation des Roboters und dessen Umgebung durchgeführt, siehe Schritt 4. Dazu werden die erfassten Daten des Ausgangszustands AZ und der Umgebung UM und die Daten des Zielzustands ZZ eingelesen und ein Simulationsmodell erstellt. Insbesondere umfasst das Simulationsmodell physikalische Eigenschaften des technischen Systems TS und dessen Umgebung UM. Zusätzlich können für ein detektiertes Objekt OBJ physikalische Eigenschaften, wie z.B. Gewicht, aus einer Datenbank abgerufen und im Simulationsmodell verwendet werden.

Die Simulationsdaten werden an das Trainingsmodul 105 der Vorrichtung 100 übermittelt, um eine maschinelle Lernroutine derart zu trainieren, eine Kombination aus günstigen Handlungsschritten zu ermitteln, siehe Schritt 5 und 6. Die maschinelle Lernroutine wird anhand der Simulationsdaten als Trainingsdaten trainiert. Dazu werden die einzelnen simulierten Handlungsschritte jeweils bewertet. Beispielsweise wird ein Handlungsschritt anhand seines Ergebnisses bewertet. Anhand der trainierten maschinellen Lernroutine kann eine günstige Kombination aus Handlungsschritten ermittelt werden. Eine günstige Kombination aus Handlungsschritten kann beispielsweise ein schnelles und energieeffizientes Greifen des Objektes OBJ durch den Roboter TS als Resultat aufweisen.

Die ermittelte Kombination aus günstigen Handlungsschritten wird an den Roboterarm übertragen und mittels der entsprechenden Regelparameter von diesem ausgeführt. Der Roboterarm führt die einzelnen Handlungsschritte durch, so dass der vorgegebene Zielzustand ZZ erreicht wird.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum rechnergestützten Ermitteln von Regelparametern für eine günstige Handlung eines technischen Systems, umfassend die Verfahrensschritte:
- Erfassen (1) eines Ausgangszustands (AZ) und einer Umgebung (UM) des technischen Systems (TS) mittels mindestens eines Sensors (101),
- Generieren (2) eines physikalischen Simulationsmodells (SIM) des technischen Systems (TS) und dessen Umgebung (UM),
- Ermitteln (3) eines Zielzustandes (ZZ) für das technische System (TS),
- Simulieren (4) verschiedener Kombinationen aus Handlungsschritten des technischen Systems (TS) mittels des physikalischen Simulationsmodells (SIM), ausgehend vom Ausgangszustand (AZ) und in Bezug auf den Zielzustand (ZZ), wobei Regelparameter des technischen Systems zum Ausführen der Handlungsschritte variiert werden, und Ausgeben von jeweiligen resultierenden Simulationsdaten,
- Trainieren (5) einer maschinellen Lernroutine anhand der jeweiligen resultierenden Simulationsdaten und mittels einer Bewertung eines jeweiligen Handlungsschrittes,
- Ermitteln (6) einer optimierten Kombination aus Handlungsschritten anhand der trainierten maschinellen Lernroutine, wobei der optimierten Kombination aus Handlungsschritten eine günstige Bewertung zugeordnet ist,
und
- Ausgeben (7) der Regelparameter der optimierten Kombination aus Handlungsschritten zum Steuern des technischen Systems (TS) .

2. Verfahren nach Anspruch 1, wobei die maschinelle Lernroutine trainiert wird, sobald Simulationsdaten von mindestens einer Kombination aus Handlungsschritten verfügbar sind.

3. Verfahren nach einem der vorhergehenden Ansprüche, wobei die Simulation des technischen Systems (TS) und das Training der maschinellen Lernroutine für mehr als einen Zielzustand (ZZ) und/oder für mehr als einen Ausgangszustand (AZ) durchgeführt werden und jeweils eine Kombination aus Handlungsschritten mit einer günstigen Bewertung ermittelt und in einer Speichereinheit gespeichert wird.

4. Verfahren nach einem der vorhergehenden Ansprüche, wobei Regelparameter für eine optimierte Kombination aus Handlungsschritten mit einer günstigen Bewertung in Abhängigkeit eines Zielzustandes (ZZ) in einer Speichereinheit gespeichert werden.

5. Verfahren nach einem der vorhergehenden Ansprüche, wobei die Regelparameter für eine optimierte Kombination aus Handlungsschritten an das technische System (TS) übertragen werden.

6. Verfahren nach einem der vorhergehenden Ansprüche, wobei der Zielzustand (ZZ) abhängig vom erfassten Anfangszustand (AZ) und/oder der erfassten Umgebung (UM) des technischen Systems (TS) ermittelt wird.

7. Verfahren nach einem der vorhergehenden Ansprüche, wobei die Bewertung eines Handlungsschrittes abhängig von einem Ergebnis eines Handlungsschrittes und/oder in Bezug auf den Zielzustand (ZZ) ausgeführt wird.

8. Verfahren nach einem der vorhergehenden Ansprüche, wobei das physikalische Simulationsmodell (SIM) abhängig vom Zielzustand (ZZ) und/oder von der Umgebung (UM) und/oder von einer Art des technischen Systems (TS) konstruiert wird.

9. Verfahren nach einem der vorhergehenden Ansprüche, wobei die Umgebung (UM) und der Ausgangszustand des technischen Systems (TS) fortlaufend mittels eines Sensors erfasst werden und das physikalische Simulationsmodell (SIM) mittels der Sensordaten fortlaufend aktualisiert wird.

10. Verfahren nach einem der vorhergehenden Ansprüche, wobei physikalische Eigenschaften eines Objektes (OBJ) in der Umgebung (UM) des technischen Systems (TS) als Parameterdaten erfasst, in einer Speichereinheit gespeichert und im physikalischen Simulationsmodell (SIM) integriert werden.

11. Verfahren nach einem der vorhergehenden Ansprüche, wobei verschiedene Kombinationen aus Handlungsschritten des technischen Systems (TS) zeitlich parallel auf mehr als einer Recheneinheit simuliert werden.

12. Vorrichtung (100) zum rechnergestützten Ermitteln von Regelparametern für eine günstige Handlung eines technischen Systems, umfassend:
- mindestens einen Sensor (101) zum Erfassen eines Ausgangszustands (AZ) und einer Umgebung des technischen Systems (TS),
- ein Generierungsmodul (102) zum Generieren eines physikalischen Simulationsmodells (SIM) des technischen Systems (TS) und dessen Umgebung (UM),
- ein Zielmodul (103) zum Ermitteln eines Zielzustandes (ZZ) für das technische System (TS),
- ein Simulationsmodul (104) zum Simulieren verschiedener Kombinationen aus Handlungsschritten des technischen Systems (TS) mittels des physikalischen Simulationsmodells (SIM), ausgehend vom Ausgangszustand (AZ) und in Bezug auf den Zielzustand (ZZ), wobei Regelparameter des technischen Systems (TS) zum Ausführen der Handlungsschritte variiert werden, und Ausgeben von jeweiligen resultierenden Simulationsdaten,
- eine Trainingsmodul (105) zum Trainieren einer maschinellen Lernroutine anhand der jeweiligen resultierenden Simulationsdaten mittels einer Bewertung eines Ergebnisses eines jeweiligen Handlungsschrittes,
- ein Optimierungsmodul (106) zum Ermitteln einer optimierten Kombination aus Handlungsschritten anhand der trainierten maschinellen Lernroutine, wobei der Kombination aus Handlungsschritten eine günstige Bewertung zugeordnet ist, und
- ein Ausgabemodul (107) zum Ausgeben der Regelparameter der optimierten Kombination aus Handlungsschritten zum Steuern des technischen Systems (TS).

13. Vorrichtung nach Anspruch 12 umfassend ein Übertragungsmodul (108) zum Übertragen der Regelparameter an das technische System (TS).

14. Vorrichtung nach Anspruch 12 oder 13 umfassend mindestens eine Speichereinheit (109) und/oder mindestens eine Recheneinheit (110).

15. Computerprogrammprodukt, das direkt in einen programmierbaren Computer ladbar ist, umfassend Programmcodeteile, die dazu geeignet sind, die Schritte des Verfahrens nach einem der Ansprüche 1 bis 11 durchzuführen.
